# EUROPEAN PATENT APPLICATION

(11) **EP 4 353 445 A1**
(43) Date of publication of application: **17.04.2024**
(21) Application number: 22820450.9
(22) Date of filing: 27.05.2022
(51) Int. Cl.: B29C 53/58, B29C 53/80, B29C 53/82, B65H 81/08, B65H 54/10, B65H 54/02, B65H 59/38, B65H 51/04, B65H 61/00, B29L 31/00

(54) **FIBER WINDING DEVICE**

(30) Priority: 07.06.2021 KR 20210073696
(71) Applicant: Korea Aerospace Research Institute, Daejeon 34133 (KR)
(72) Inventor: CHOI, Ik Hyeon, Daejeon 34133 (KR); LEE, Joo Hee, Daejeon 34133 (KR); LEE, Jong Won, Daejeon 34133 (KR)
(74) Representative: Forresters IP LLP
(86) International application number: PCT/KR2022/007550
(87) International publication number: WO 2022/260322

(57) **Abstract**

A fiber winding device according to an embodiment comprises: a spool assembly including a plurality of bobbins provided around a spiral wire in a circumferential direction to form a spool surface; a guide ring provided at a front part of the center of the spool assembly in a direction oblique to the spool surface; and a wire transfer unit for transferring the spiral wire to pass through the guide ring, wherein the spiral wire is disposed to perpendicularly pass through the center of the guide ring, the spool assembly is disposed in a direction oblique to the wire, and fibers from the plurality of bobbins are wound on the spiral wire along the guide ring. In addition, by sequentially arranging a plurality of fiber winding devices along the spiral wire, fibers in multiple layers can be wound on one spiral wire sequentially and continuously.

## Description

### Technical Field

The following description relates to a fiber winding device.

### Background Art

As research on weight reduction and optimization of components becomes increasingly important, research to replace components made of steel, which have been widely used in the past, with lightweight and new materials is being actively conducted in various industrial fields.

In general, spiral coil springs made of steel are used in small aircraft landing gear or automobile suspension systems. In order to reduce the weight of a steel spring, technology for manufacturing a coil spring composite structure using carbon fiber or glass fiber composite materials is continuously being developed.

In case of manufacturing a composite structure by substituting a lightweight material as described above, it is necessary to increase structural performance more effectively and stably in the process of winding the fiber bundle around a cylindrical frame or inserting the bundle into a mold.

In this regard, Korean Patent Application No. 10-2021-0030330 discloses an apparatus and method for manufacturing a fibrous web, a fibril-shaped fiber aggregation, or non-woven fabric, and a fibrous web, a fibril-shaped fiber aggregation, or non-woven fabric manufactured thereby.

The above description has been possessed or acquired by the inventor(s) in the course of conceiving the present disclosure and is not necessarily an art publicly known before the present application is filed.

### Disclosure of the Invention

### Technical Goals

An aspect according to an embodiment is to provide a fiber winding device for winding composite fibers around a spiral wire.

An aspect according to an embodiment is to provide a fiber winding device that increases structural performance of hardness/strength of a spring composite structure.

An aspect according to an embodiment is to provide a fiber winding device that is disposed in a direction oblique to a spiral wire and is less constrained by space.

### Technical Solutions

According to an embodiment, a fiber winding device includes a spool assembly including a plurality of bobbins provided around a spiral wire in a circumferential direction, the spool assembly being configured to form a spool surface, a guide ring provided at a center of the spool assembly in a direction oblique to the spool surface, and a wire transfer unit configured to transfer the spiral wire to pass through the guide ring, wherein the spiral wire may be disposed to perpendicularly pass through a center of the guide ring, the spool surface of the spool assembly may be disposed in a direction oblique to the spiral wire, and fibers from the plurality of bobbins may be wound on the spiral wire along the guide ring.

According to an aspect, all of the plurality of bobbins may be configured to move in one direction to wind fibers in one direction, or some bobbins may be configured to move in opposite directions to wind fibers in a woven form.

According to an aspect, the fiber winding device according to an embodiment may further include a bobbin carrier to which a tension control unit configured to control tension of fibers is attached.

According to an aspect, the wire transfer unit may be installed in plurality along the spiral wire.

According to an aspect, the wire transfer unit may include a first roller configured to provide a transferring force to the spiral wire and a second roller configured to prevent the spiral wire from leaving, the first roller may be disposed on both sides of the spiral wire, and the second roller may be disposed on at least one of the inside or outside of the spiral wire.

According to an aspect, the first roller may have a tapered shape, and a taper portion having a wide diameter of the first roller may be disposed toward the outside of the spiral wire.

According to an aspect, the fiber winding device according to an embodiment may further include a wire transfer speed measurement unit and a roller motor rotation speed control unit configured to control a rotation speed of a motor driving rollers of the wire transfer unit.

According to an aspect, the fiber winding device according to an embodiment may further include a wire transfer speed measurement unit and a bobbin rotation speed control unit configured to control rotation speeds of the bobbins.

A composite structure may be manufactured through the fiber winding device according to the above-described embodiment.

### Effects

A fiber winding device according to an embodiment may wind composite fiber around a spiral wire in one direction or in a weaving direction.

The fiber winding device according to an embodiment may maximize structural performance of hardness/strength of a spring composite structure.

The fiber winding device according to an embodiment may avoid space constraint due to adjacent wires by being disposed in a direction oblique to a spiral wire.

The effects of the fiber winding device according to an embodiment are not limited to the above-mentioned effects, and other unmentioned effects can be clearly understood from the following description by one of ordinary skill in the art.

### Brief Description of Drawings

FIG. 1 is a plan view of a fiber winding device according to an embodiment.
FIG. 2 is a front view of a fiber winding device according to an embodiment.
FIG. 3 is a plan view of a wire transfer unit of a fiber winding device according to an embodiment.
FIG. 4 is a front view of a wire transfer unit of a fiber winding device according to an embodiment.
FIG. 5 illustrates a roller configuration of a wire transfer unit of a fiber winding device according to an embodiment.
FIG. 6 illustrates an embodiment in which a wire transfer speed measurement unit and a roller motor rotation speed control unit are additionally installed in a fiber winding device according to an embodiment.
FIG. 7 illustrates an embodiment in which a wire transfer speed measurement unit and a bobbin rotation speed control unit are additionally installed in a fiber winding device according to an embodiment.
FIG. 8 illustrates an embodiment in which a plurality of fiber winding devices according to an embodiment is installed.

### Best Mode for Carrying Out the Invention

Hereinafter, embodiments will be described in detail with reference to the accompanying drawings. However, various alterations and modifications may be made to the embodiments. Here, the embodiments are not meant to be limited by the descriptions of the present disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. Terms defined in dictionaries generally used should be construed to have meanings matching with contextual meanings in the related art and are not to be construed as an ideal or excessively formal meaning unless otherwise defined herein.

When describing the embodiments with reference to the accompanying drawings, like reference numerals refer to like components and a repeated description related thereto will be omitted. In the description of the embodiments, a detailed description of well-known related structures or functions will be omitted when it is deemed that such description will cause ambiguous interpretation of the present disclosure.

In addition, terms such as first, second, A, B, (a), (b), and the like may be used to describe components of the embodiments. Each of these terms is not used to define an essence, order or sequence of a corresponding component but used merely to distinguish the corresponding component from other component(s). It should be noted that if one component is described as being "connected", "coupled" or "joined" to another component, the former may be directly "connected," "coupled", and "joined" to the latter or "connected", "coupled", and "joined" to the latter via another component.

The same name may be used to describe an element included in the embodiments described above and an element having a common function. Unless disclosed to the contrary, the descriptions of any one embodiment may be applied to other embodiments and thus, duplicated descriptions will be omitted.

In the present disclosure, "bobbin" means a tubular reel on which fibers are wound and "spool surface" means a surface on which bobbins are provided.

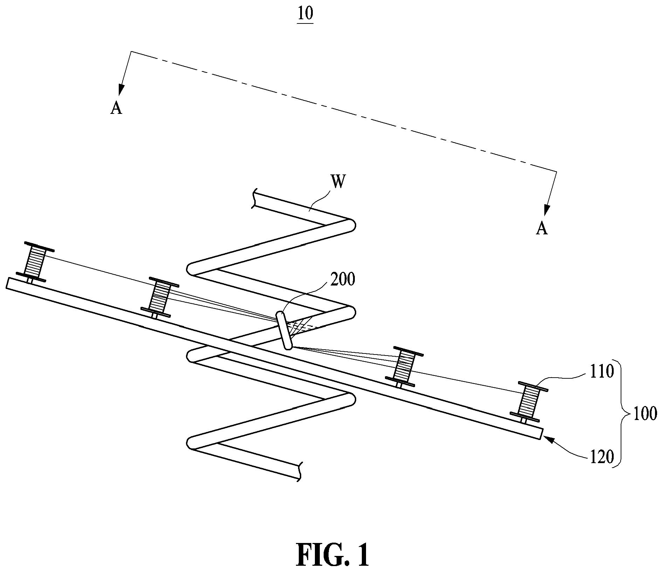

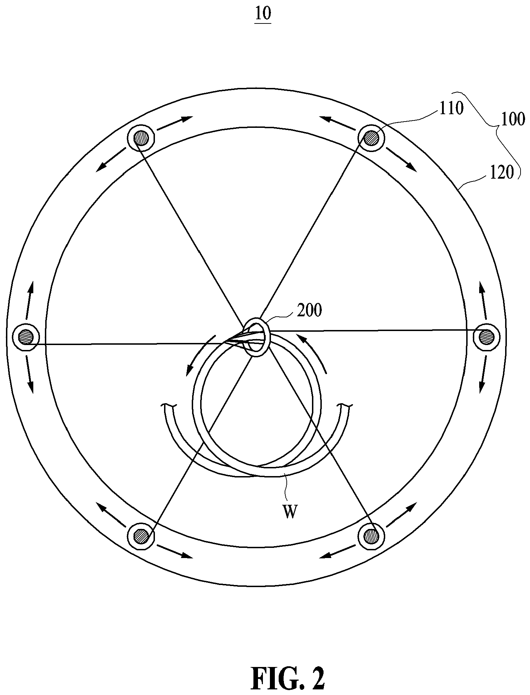

FIG. 1 is a plan view of a fiber winding device 10 according to an embodiment. FIG. 2 is a front view of the fiber winding device 10 from the direction A-A of FIG. 1 according to an embodiment.

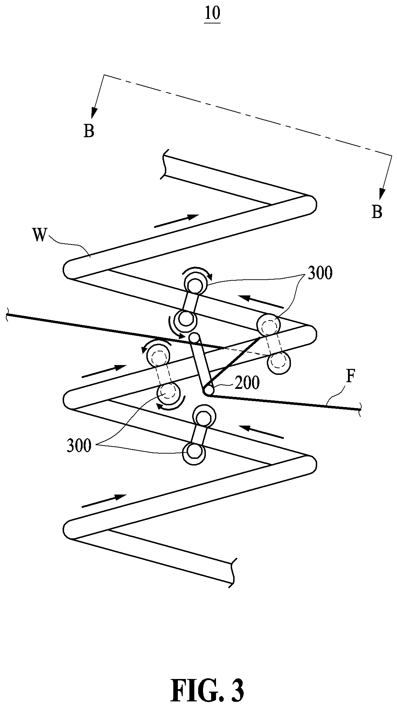

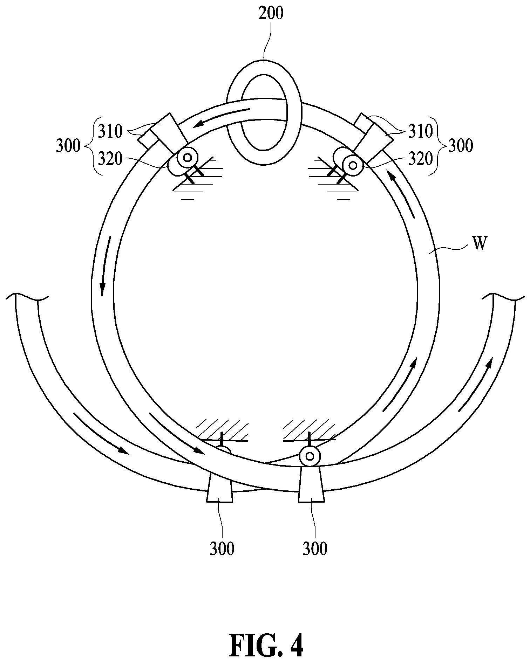

The fiber winding device 10 according to an embodiment may include a spool assembly 100 including a plurality of bobbins 110 provided around a spiral wire W in the circumferential direction to form a spool surface 120, and a guide ring 200 provided at the center of the spool assembly 100. In addition, the fiber winding device 10 according to an embodiment may include a wire transfer unit 300 for transferring the spiral wire W to pass through the guide ring 200, as described in detail below with reference to FIGS. 3 and 4.

In general, in a fiber winding device, that is, a weaving (braiding) device, it is common to draw(pull) outward, that is, in a perpendicular direction, according to the speed at which fibers are wound, in a state where a guide ring is installed parallel to a spool surface and the object, a wire, etc. to which the fibers are wound is disposed perpendicular to the guide ring and the spool surface.

In the present disclosure, the spool surface 120 of the fiber winding device 10 according to an embodiment may be disposed in a direction oblique to the spiral wire W with the guide ring 200 as the center. While installed on the spiral wire W, the spiral wire W may be disposed to perpendicularly pass through the center of the guide ring 200. The plurality of bobbins 110 of the spool assembly 100 may be arranged in the circumferential direction around the guide ring 200 on the spool surface 120 as the center of the guide ring 200. Since the spool surface 120 of the fiber winding device 10 according to an embodiment is disposed in a direction oblique to the spiral wire W, space constraint due to adjacent wires may be avoided.

Referring to FIG. 2, while fibers are unwound from the plurality of bobbins 110 of the spool assembly 100, the fibers may be wound around the spiral wire W along the guide ring 200. The plurality of bobbins 110 may all move in one direction on the spool surface to wind the fibers in one direction, or some bobbins 110 may move in opposite directions to wind the fibers in a woven form. In FIG. 2, the number of bobbins 110 on which the fibers are wound and the rotation direction are briefly expressed, but in the present disclosure, the number of bobbins 110 is not limited, and a device for winding fibers in one direction or a device for weaving (braiding) fibers on an object by twisting and turning the bobbins 110 in different directions may be included.

The fiber winding device 10 according to an embodiment may further include a bobbin carrier (not shown) to which a tension control unit configured to control tension of fibers is attached.

In the spool assembly 100 of the fiber winding device 10 according to an embodiment, since the spool surface 120 and the guide ring 200 are not parallel, as the bobbins 110 rotate around the circumference of the spool surface 120, the distance to the spiral wire changes periodically. Therefore, the tension control unit needs to be installed on the bobbins 110. That is, when a lot of fibers are unwound from the bobbins 110 and then less are to be unwound, an elastic device such as a spring may need to be installed to pull the fibers toward the bobbins 110 to maintain a constant tension. Accordingly, bobbin carriers to which a tension control unit configured to control tension of fibers is attached may be provided to the side of the bobbins 110 on the spool surface 120.

FIG. 3 is a plan view of a wire transfer unit 300 of a fiber winding device 10 according to an embodiment. FIG. 4 is a front view of a wire transfer unit 300 of a fiber winding device according to an embodiment.

In order to spirally transfer the spiral wire W, the fiber winding device 10 according to an embodiment may include the wire transfer unit 300 separately for transferring the spiral wire W to pass through the guide ring 200.

In particular, when a fiber F is wound around the spiral wire W in one direction, a torsional moment acts on the spiral wire W due to the tension applied to the fiber F from the bobbins 110, and in order to offset this and to spirally transfer the spiral wire W while maintaining the diameter of the circular shape of a coil, a plurality of wire transfer units 300 are required as shown in FIG. 3.

FIG. 4 shows an embodiment in which the transferring function of the spiral wire W is implemented using four wire transfer units 300. Furthermore, when the fiber is repeatedly wound around the wire several times, the plurality of wire transfer units 300 needs to be sequentially installed as shown in FIG. 3. Here, the lower two wire transfer units 300 in FIG. 4 may overlap with the wire transfer units 300 of an adjacent set and be used.

The wire transfer unit 300 needs to be fixed in an appropriate position in space so as not to restrict the rotation of the spool surface 120 and the fibers and the spiral movement of the spiral wire W.

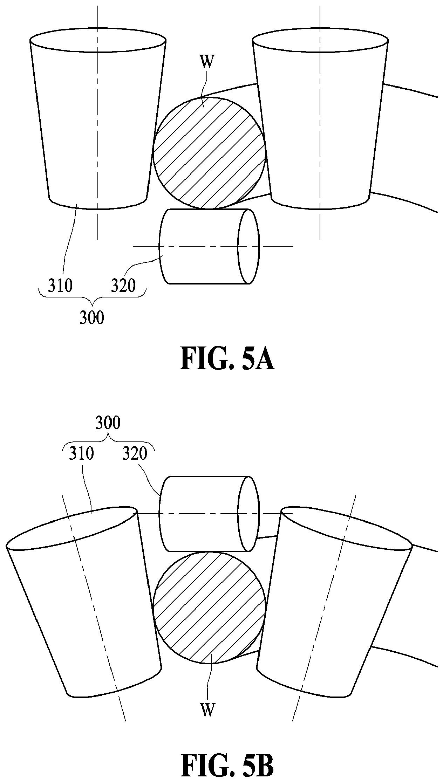

The wire transfer unit 300 must transfer the wire by driving rollers 310 and 320, and FIG. 5 illustrates embodiments of roller configurations of the wire transfer unit 300 of the fiber winding device 10 according to an embodiment.

In FIG. 5A, the wire transfer unit 300 may include a first roller 310 providing a transferring force to the spiral wire W and a second roller 320 preventing the spiral wire W from leaving. The first rollers 310 may have a tapered shape manufactured as having a larger diameter outside the radius of the coil shape considering the round shape of the coil-shaped spiral wire W. That is, a taper portion having a wide diameter of the first roller 310 may be disposed toward the outside of the spiral wire W. The first rollers 310 may be disposed on both sides of the spiral wire W such that rotational axes are parallel to each other. The second roller 320 may be disposed inside the coil-shaped spiral wire W.

FIG. 5B is a conceptual diagram illustrating another embodiment of a roller configuration of the wire transfer unit 300. In this embodiment, the second roller 320 may be disposed outside the coil-shaped spiral wire W and the first rollers 310 may be disposed on both sides of the spiral wire W in a direction diverging from each other to the outside of the radius of the spiral wire W. Unlike FIG. 5A, the rotational axes of the first rollers 310 on both sides are not parallel to each other, so manufacturing may be more complicated, but there is an advantage in avoiding the narrowness of installation space inside the radius of the coil shape.

The fiber winding device 10 according to an embodiment may further include a motor for driving rollers, and driving motors for driving the rollers may be provided on either side of the first roller 310 or the second roller 320.

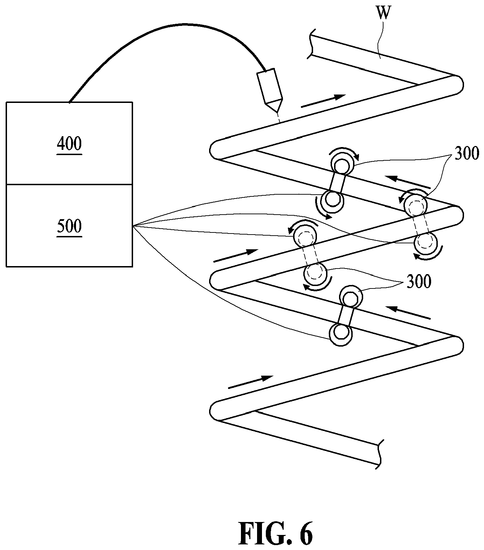

FIG. 6 illustrates an embodiment in which a wire transfer speed measurement unit 400 and a roller motor rotation speed control unit 500 for controlling the rotation speed of a motor driving the first and second rollers 310 and 320 of the wire transfer unit 300 are additionally installed in a fiber winding device 10 according to an embodiment.

Since the wire transfer unit 300 transfers the spiral wire W by the frictional force between the first and second rollers 310 and 320 and the spiral wire W, unlike the transfer by a gear or a chain, an error may occur in the transfer speed of the spiral wire W according to the increase or decrease of the frictional force. Therefore, in order to accurately maintain the transfer speed of the spiral wire W, a separate wire transfer speed measurement unit 400 needs to be provided. The roller motor rotation speed control unit 500 that increases or decreases the rotation speed of the first and second rollers 310 and 320 based on the measured value of the wire transfer speed measurement unit 400 may be provided separately.

In order to wind the fiber around the spiral wire W in an accurate angular direction through the wire transfer speed measurement unit 400 and the roller motor rotation speed control unit 500, an accurate proportional relationship needs to be maintained between the rotation speed of the bobbins 110 and the transfer speed of the spiral wire W. When the rotation speed of the bobbins 110 is constantly maintained, the fiber may be wound around the spiral wire W in the accurate angular direction by controlling the transfer speed of the spiral wire W with a value calculated from the rotation speed of the bobbins 110.

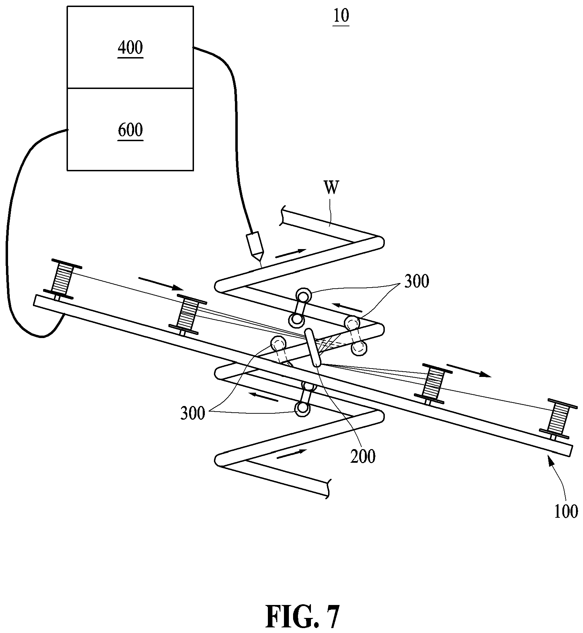

FIG. 7 illustrates an embodiment in which the wire transfer speed measurement unit 400 and a bobbin rotation speed control unit 600 for controlling the rotation speed of the bobbins 110 are additionally installed in a fiber winding device according to an embodiment.

FIG. 7 illustrates another method of winding fiber around the spiral wire W in an accurate angular direction. A method of measuring the transfer speed of the spiral wire W and controlling the rotation speed of the bobbins 110 according to this speed is illustrated. Even if an error occurs in the transfer speed of the spiral wire W compared to a desired value, through the bobbin rotation speed control unit 600 according to a transfer speed value of the spiral wire W measured by the wire transfer speed measurement unit 400, by controlling the rotation speed of the bobbins 110, the fiber may be wound around the spiral wire W in the accurate angular direction.

Without being limited to the embodiments described above, the wire transfer speed measurement unit 400, the roller motor rotation speed control unit 500, and the bobbin rotation speed control unit 600 may be used simultaneously. In this case, the speed of winding the fiber around the spiral wire W may be controlled by winding the fiber around the spiral wire W in the accurate angular direction. That is, in order to maximize the fiber winding speed while maintaining the desired quality such as the accuracy of the angle of the fiber winding, the best production speed may be determined by checking the relationship between work productivity and quality by simultaneously using the three units of the wire transfer speed measurement unit 400, the roller motor rotation speed control unit 500, and the bobbin rotation speed control unit 600.

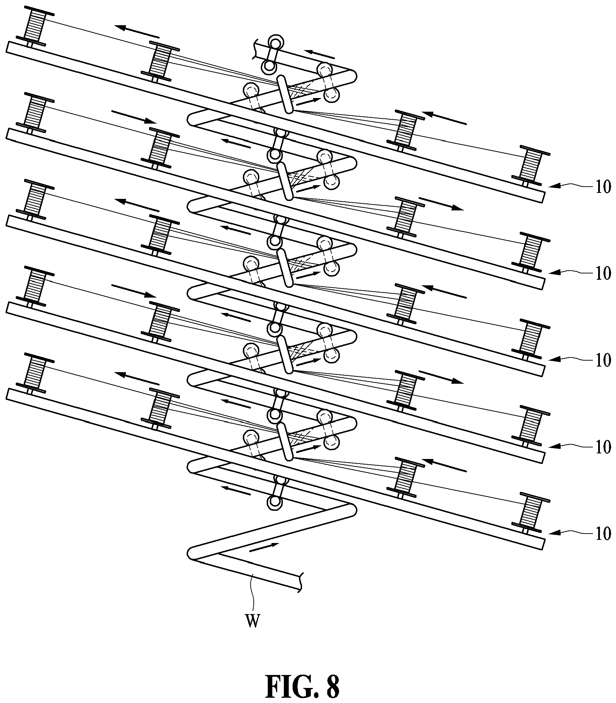

FIG. 8 illustrates an embodiment in which a plurality of fiber winding devices according to an embodiment is installed. A plan view of an embodiment in which a plurality of fiber winding devices 10 according to an embodiment is installed and sequentially and continuously winds a plurality of fiber layers around the spiral wire W is illustrated.

Hereinafter, components of the fiber winding device 10 according to an embodiment will be described in detail, and an operation method of manufacturing a coil spring composite structure by winding fibers on a spiral wire W will be described in detail below.

The fiber winding device 10 according to an embodiment is installed on the spiral wire W to which the fiber F is to be wound and the spool assembly 100 may be obliquely provided on the spiral wire W in an oblique direction. Here, the guide ring 200 is provided at the center of the spool assembly 100 and the spiral wire W may be disposed to perpendicularly pass through the guide ring 200.

The fibers may be unwound from the plurality of bobbins 110 arranged in the circumferential direction on the spool surface 120 around the guide ring 200 and wound on the spiral wire W through the guide ring 120. Here, the plurality of bobbins 110 on the spool surface 120 may all move in one direction to wind the fibers in one direction, or some bobbins 110 may move in opposite directions to wind the fibers in a woven form.

The wire transfer unit 300 may provide a transferring force to the spiral wire W through the first rollers 310 disposed on both sides of the spiral wire W, and leaving of the spiral wire W may be prevented through the second rollers 320 disposed inside or outside the spiral wire W.

The fiber winding device 10 according to an embodiment may measure the transferring speed of the spiral wire W through the wire transfer speed measurement unit 400, and through the roller motor rotation speed control unit 500 or the bobbin rotation speed control unit 600, the fiber F may be wound around the spiral wire W in the accurate angular direction. The roller motor rotation speed control unit 500 may control the rotation speed of the motor driving the first and second rollers 310 and 320 based on a measured transfer speed value of the spiral wire W, and the bobbin rotation speed control unit 600 may wind the fiber around the spiral wire W in the accurate angular direction by controlling the rotation speed of the bobbins 110.

The fiber winding device 10 according to an embodiment may provide a coil spring composite structure manufactured by winding carbon fibers, composite fibers, etc. on the spiral wire W.

In the fiber winding device 10 according to an embodiment, the spool surface 120 and the guide ring 200 are not parallel to each other and are disposed in a direction oblique to the spiral wire W, so that an effect of avoiding space restraint due to adjacent wires may be provided.

The fiber winding device 10 according to an embodiment may provide an effect of drawing an object to the outside according to the progression speed at which the fiber is wound on the object to which the fiber is wound.

In the fiber winding device 10 according to an embodiment, in the process of winding a twisted fiber bundle into a cylinder-shaped frame or inserting the twisted fiber bundle into a mold according to a conventional composite coil spring manufacturing method, by preventing the direction of the fibers from being distorted or the fibers from being formed in a bent state rather than a straight state, it is possible to effectively prevent the possibility that structural performance of the composite structure, such as hardness or strength, is lower than the design value after molding.

In the fiber winding device 10 according to an embodiment, when a composite coil spring is manufactured, when viewed from a cross-section of the spring, by using a method of directly winding fibers on a spiral wire, that is, a wire, corresponding to an internal core and then using a method of impregnating and molding resin as it is, it is possible to provide an effect in which the direction of the fiber is accurately maintained even after the molding in the direction in which the fiber is initially wound on the wire. In addition, by preventing the possibility of the fiber from being bent during the molding process, the effect that the structural performance, such as hardness/strength of the spring after manufacturing, appears as designed may also be provided.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if components in a described system, architecture, device, or circuit are combined in a different manner, or replaced or supplemented by other components or their equivalents.

Therefore, other implementations, other embodiments, and equivalents to the claims are also within the scope of the following claims.

## Claims

1. A fiber winding device comprising:
a spool assembly comprising a plurality of bobbins provided around a spiral wire in a circumferential direction, the spool assembly being configured to form a spool surface;
a guide ring provided at a center of the spool assembly in a direction oblique to the spool surface; and
a wire transfer unit configured to transfer the spiral wire to pass through the guide ring,
wherein the spiral wire is disposed to perpendicularly pass through a center of the guide ring, the spool surface of the spool assembly is disposed in a direction oblique to the spiral wire, and fibers from the plurality of bobbins are wound on the spiral wire along the guide ring.

2. The fiber winding device of claim 1, wherein
all of the plurality of bobbins are configured to move in one direction to wind fibers in one direction, or some bobbins are configured to move in directions opposite to each other to wind fibers in a woven form.

3. The fiber winding device of claim 1, further comprising
a bobbin carrier to which a tension control unit configured to control tension of fibers is attached.

4. The fiber winding device of claim 1, wherein
the wire transfer unit is installed in plurality along the spiral wire.

5. The fiber winding device of claim 1, wherein
the wire transfer unit comprises a first roller configured to provide a transferring force to the spiral wire and a second roller configured to prevent the spiral wire from leaving,
the first roller is disposed on both sides of the spiral wire, and
the second roller is disposed on at least one of the inside or outside of the spiral wire.

6. The fiber winding device of claim 5, wherein
the first roller has a tapered shape, and a taper portion having a wide diameter of the first roller is disposed toward the outside of the spiral wire.

7. The fiber winding device of claim 1, further comprising:
a wire transfer speed measurement unit; and
a roller motor rotation speed control unit configured to control a rotation speed of a motor driving rollers of the wire transfer unit.

8. The fiber winding device of claim 1, further comprising:
a wire transfer speed measurement unit; and
a bobbin rotation speed control unit configured to control rotation speeds of the bobbins.

9. A fiber winding system comprising
the fiber winding device of any one of claims 1 to 8,
wherein the fiber winding device is provided in plurality and arranged in sequence along the spiral wire.

10. A composite structure manufactured using the fiber winding device of any one of claims 1 to 8 or the fiber winding system of claim 9.
